## Europäisches Patentamt
## European Patent Office
## Office européen des brevets

(19)

(11) Veröffentlichungsnummer: **0 304 804**
**A2**

(12) **EUROPÄISCHE PATENTANMELDUNG**

(21) Anmeldenummer: **88113438.1**

(22) Anmeldetag: **18.08.88**

(51) Int. Cl.4: **G06K 7/10**

(30) Priorität: **24.08.87 DE 3728211**

(43) Veröffentlichungstag der Anmeldung:
**01.03.89 Patentblatt 89/09**

(84) Benannte Vertragsstaaten:
**CH DE FR GB IT LI NL SE**

(71) Anmelder: **Erwin Sick GmbH Optik-Elektronik**
**Sebastian-Kneipp-Strasse 1**
**D-7808 Waldkirch(DE)**

(72) Erfinder: **von Stein, Walter**
**Allmendweg 8**
**D-7808 Waldkirch(DE)**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Scanner zur Erfassung von Strichcodes auf Gegenständen.**

(57) Der Scanner hat einen Lichtsender (10), der zur zeilenweisen Abtastung eines Gegenstands (20) Licht auf ein rotierendes Spiegelrad (12) hin abstrahlt. Das Spiegelrad (12) weist bezüglich seiner Drehachse unterschiedlich geneigte Spiegelflächen (1, 2, 3' 4, 5, 6) auf, die das Licht in parallelen Abtastzeilen auf den Gegenstand (18) werfen. Das von dem Gegenstand (20) zurückgestreute Licht wird mit einer Optik aufgenommen und einem Fotodetektor (30) überstellt. Das Ausgangssignal des Fotodetektors (30) wird nach Analog-Digital wandlung in einen Speicher (1″, 2″, 3″, 4″, 5″, 6″) eingespeichert. Eine Vorauswertestufe mit einem Programmierbaustein (32) greift auf den Speicher (1″, 2″, 3″, 4″, 5″, 6″) zu, identifiziert den von einem Strichcode stammenden Signalanteil und überträgt ihn auf einen zweiten Speicher (38) von wesentlich kleinerer Speicherbreite, aber erheblich grösserer Speichertiefe. Hier stehen die in einer Vielzahl von Abtastperioden gewonnen, von Strichcodes stammenden Signalanteile für eine Analyse der Codeinformation zur Verfügung, die nicht notwendiger Weise synchron mit dem Scannen vorgenommen wird.

## Scanner zur Erfassung von Strichcodes

Die Erfindung betrifft einen Scanner zur Erfassung von Strichcodes auf Gegenständen mit einem Lichtsender, der zur zeilenweisen Abtastung des Gegenstands Licht auf ein rotierendes Spiegelrad hin abstahlt, mit einer Optik, die von dem Gegenstand zurückgestreutes Licht aufnimmt und einem Fotodetektor überstellt, und mit einer das Ausgangssignal des Fotodetektors verarbeitenden Auswerteelektronik.

Bei Scannern dieser Art wird nach dem Stand der Technik das Ausgangssignal des Fotodetektors synchron mit der Scanbewegung des Lichtflecks verarbeitet. Bei den angestrebten großen Scanbreiten und hohen Abtastfrequenzen fällt dabei eine Datenflut an, die nur mit schnellen und entsprechend aufwendigen Rechnern bewältigt werden kann. Da das Strichcodefeld in der Regel nur einen kleinen Teil der Scanbreite einnimmt, wird viel unnütze Information aufwendig ausgewertet und wertvolle Speicher- und Rechenkapazität blockiert, während für eine intensive Auswertung des eigentlich interessierenden Signalbereichs nur ungenügende Möglichkeiten bestehen.

Aufgabe der Erfindung ist es, einen Scanner der genannten Art anzugeben, mit dem sich bei unaufwendigem Aufbau insbesondere der Auswerteelektronik große Scanbreiten und hohe Abtastfrequenzen erreichen lassen.

Diese Aufgabe wird bei einem Scanner der genannten Art dadurch gelöst, daß das Spiegelrad bezüglich seiner Drehachse unterschiedlich geneigte Spiegelflächen hat, die das Licht in parallelen Abtastzeilen auf den Gegenstand werfen. Zweckmäßig ist weiter vorgesehen, daß ein Speicher vorhanden ist, in den das Ausgangssignal des Fotodetektors eingespeichert wird, und daß zu der Auswerteelektronik eine auf den Speicher zugreifende Vorauswertestufe gehört, die anhand des für mehrere Abtastzeilen eingespeicherten Signals den Signalanteil, der von einem durch die Abtastzeilen erfaßten Strichcode stammt, identifiziert und zur weiteren Signalauswertung herausgreift.

Die Erfindung ermöglicht es, in einer unaufwendigen, schnellen und fehlersicheren Vorauswertung den Signalanteil herauszugreifen, der von einem mit dem Scanner erfaßten Strichcode stammt, und allein diesen Signalanteil einer die Codeinformation analysierenden weiteren Auswertung zu unterziehen. Die zu bewältigende Datenflut wird dadurch wesentlich reduziert, und es ist der Einsatz eines vergleichsweise langsamen und entsprechend preisgünstigen Rechners möglich. Verglichen mit Scanner nach dem Stand der Technik kann bei gleicher Rechnerleistung die Scanrate ohne weiteres um einen Faktor Zehn angehoben werden.

Das Spiegelrad ist vorzugsweise regelmäßig polygonal, und alle seine Spiegelflächen unterschiedlich bezüglich der Drehachse geneigt, so daß die Zahl der Abtastzeilen der Anzahl der Polygonspiegel entspricht. Bei dieser Bauform wird eine Scanperiode mit Abtastvorgängen entlang der parallelen Abtastzeilen während je einer vollen Umdrehung des Spiegelrads absolviert. Das macht die Zeitsteuerung der Signal-aufnahme und -speicherung besonders einfach; insbesondere kann mit dem Spiegelrad ein unaufwendiger Taktsignalgeber verbunden sein.

Der Abstand der beiden äußersten Abtastzeilen sollte ca. ein Viertel und weniger der Codestrichlänge betragen. Man hat so einen weiten Toleranzbereich, innerhalb dessen alle Abtastzeilen auf einem auszulesenden Strichcode zu liegen kommt, so daß man signifikante Daten für die Vorauswertung gewinnt.

Der zeilenweisen Abtastung kann eine langsame Drehung der Scanrichtung überlagert sein. Die Drehung, die mit herkömmlichen optischen Mitteln bewirkt werden kann, sollte so langsam sein, daß sie während einer Abtastperiode nicht merklich ins Gewicht fällt. Es wird so ein Scanner zur omnidirektionalen Erfassung von Strichcodes realisiert.

Das Ausgangssignal des Fotodetektors ist ein Analogsignal, und der Speicher vorzugsweise ein digitaler Speicher. Es versteht sich daher, daß das Ausgangssignal des Fotodetektors eine Analog-Digital-Wandlung unterworfen wird, bevor es in den Speicher eingespeichert wird. Bei dem gespeicherten Signal kann es sich insbesondere um ein 1-Bit HellDunkelsignal handeln. Der Speicherplatzbedarf ist dann minimal, und die Speicherorganisation höchst einfach. Man kann aber auch ein Helligkeitsstufen diskriminierendes MehrBit Signal speichern, insbesondere ein 8-Bit Signal, das man erhält, indem man das Ausgangssignal des Fotodetektors über einen Analog-Digital-Wandler mit einer entsprechenden Zahl von Schaltschwellen schickt. Der Speicherplatzbedarf und der Rechenaufwand bei der Weiterverarbeitung eines solchen Signals sind zwar höher, doch wird die Auflösung der Abtastung erheblich verbessert. Das ist wichtig, wenn ungewollte Schärfenänderungen vorliegen, oder mit gewollten Schärfentiefenänderungen die gesamte Tiefenschärfe des Scanners erhöht werden soll; beispielsweise wenn der Fokus in verschiedenen Schärfenebenen liegt, und die optimale Schärfenebene gefunden werden soll.

Der Speicher sollte für die kleinste aufzulösende Codestrichbreite wenigstens fünf Speicherplätze haben. Damit wird bei geringem Speicherplatzbedarf eine gute Auflösung erzielt.

Der Speicher kann aus miteinander verbundenen Schieberegistern aufgebaut sein. Bei Abspeicherung von 1-Bit HellDunkelsignalen empfiehlt es sich, für jede Abtastzeile ein Schieberegister vorzusehen, während bei Abspeicherung von Mehr-Bit signalen pro Abtastzeile ein Satz mit einer entsprechenden Mehrzahl von Schieberegistern vorhanden sein kann. Speicheraufbau und Speicherorganisation gestalten sich so jeweils besonders einfach.

Die Vorauswertestufe kann einen oder mehrere Programmierbausteine enthalten. Diese ermöglichen eine programmierbare und entsprechend variable Vorauswertung, bei der beispielsweise Codestriche auch in Schräglage von einem sie umgeben den Streudruck unterschieden werden können. Dank des Vorhandenseins mehrerer Abtastzeilen kann der Ort des Strichcodes innerhalb des Streudruckes genau ermittelt werden.

In einer bevorzugten Bauform hat der erfindungsgemäße Scanner einen zweiten Speicher, in den der als von einem Strichcode stammend identifizierte Signalanteil aus dem ersten Speicher übertragen werden kann. Der zweite Speicher übernimmt damit den bereinigten, für die Codeerfassung allein relevanten Signalanteil für eine effektive weitere Auswertung.

Die Kapazität des ersten Speichers ist vorzugsweise entsprechend der vollen Scanbreite und der Anzahl von Abtastzeilen dimensioniert, so daß er gerade die während einer Scanperiode gewonnen Signale aufnehmen kann. Die Kapazität des zweiten Speichers ist dagegen vorzugsweise auf die übliche Länge eines strichcodefelds, die wesentlich kleiner sein kann als die Scanbreite, und ein Mehrfaches der Anzahl von Abtastzeilen ausgelegt, beispielsweise ein 20 bis 100faches dieser Anzahl, so daß sich in einer entsprechenden Zahl von Abtastperioden gewonnene, als von einem Strichcode stammend identifizierte Signalanteile in den zweiten Speicher übertragen lassen. Damit steht im zweiten Speicher für die weitere Auswertung der in einer größeren Zahl von Abtastperioden erhaltene relevante Signalanteil zur Verfügung. Es ist so eine Analyse der Codeinformation mit einem Höchstmaß an Sicherheit möglich, und zwar bei vergleichsweise nie rigem Rechenaufwand, da die insgesamt zu bewältigende Datenmenge immer noch gering ist.

Auch der zweite Speicher kann aus miteinander verbundenen Schieberegistern aufgebaut sein. Die Länge der Schieberegister iat dabei vorzugsweise auf den von einem Strichcode kommenden Signalanteil abgestimmt, wobei im Fall von 1-Bit Signalen für jeden Signalanteil ein Schieberegister, und bei Mehr-Bit Signalen für jeden Signalanteil ein Satz von entsprechend mehreren Schieberegistern vorzusehen ist. Speicheraufbau und -organisation sind bei dieser Bauform besonders einfach

Der zweite Speicher sollte für die kleinste aufzulösende Codestrichbreite dieselbe Anzahl von Speicherplätzen haben, wie der erste Speicher. Damit ist bei einfachem Speicheraufbau ein Signalübertrag zwischen den Speichern ohne Informationsverlust gewährleistet.

Für die weitere, die Strichcodeinformation analysierende Auswertung greift die Auswerteelektronik auf den zweiten Speicher zu. Die Auswerteelektronik kann wenigstens einen Auswerterechner enthalten, der nicht notwendigerweise synchron mit der Abtastfrequenz des Scanners Signale aus dem zweiten Speicher ausliest. Der Arbeitszyklus des Auswerterechners ist so unabhängig von der Abtastfrequenz des Scanners. Man hat so insbesondere viel Zeit für die Auswertung, nachdem ein Strichcode abgetastet wurde und bevor der nächste Strichcode in den Abtastbereich des Scanners kommt. Der Auswerterechner kann entsprechend langsam und preisgünstig sein.

Falls Strichcodes in schneller Folge hintereinander zu scannen sind; kann zur Steigerung der Auswerteleistung mit mehreren parallelen Auswerterechnern auf den zweiten Speicher zugegriffen werden, wobei die Rechner nach einem TimeSharing-Verfahren arbeiten. Da man nach wie vor mit relativ langsamen Auswerterechnern auskommt, ist der Mehraufwand vergleichsweise gering. Für die Abarbeitung der gespeicherten Daten ist wiederum sehr von Vorteil, daß der Arbeits zyklus der Auswerterechner unabhängig von der Abtastfrequenz des Scanners bestimmt werden kann.

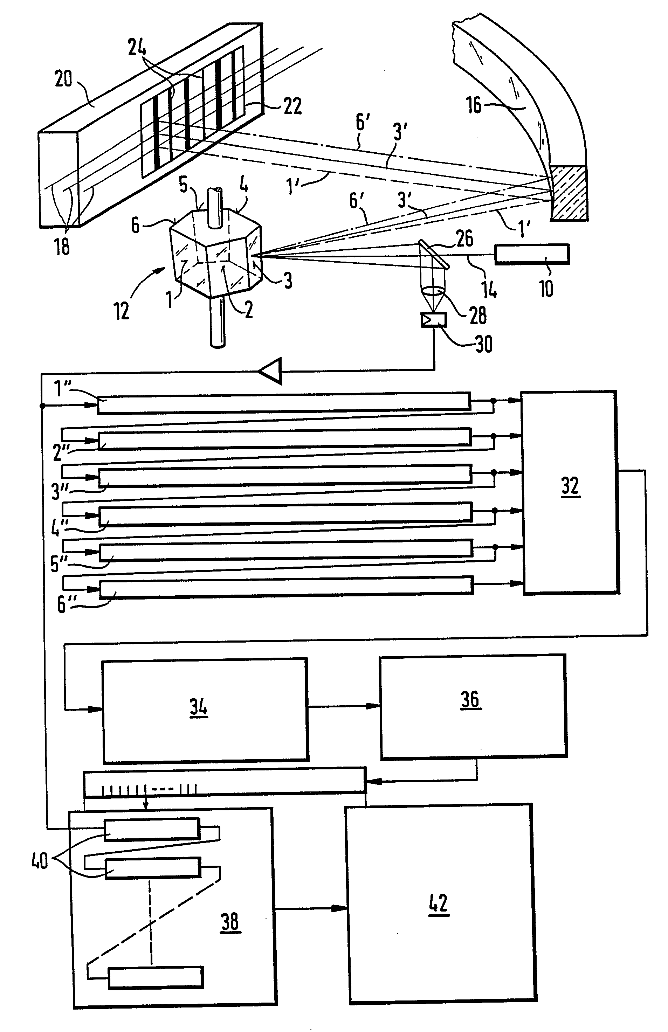

Die Erfindung wird im folgenden anhand eines in der Zeichnung dargestellten Ausführungsbeispiels näher erläutert. Die einzige Abbildung zeigt schematisch Teile der Optik und Auswerteelektronik eines Scanners zur Erfassung von Strichcodes.

Ein Lichtsender 10, beispielsweise ein Laser, strahlt Licht auf ein rotierendes Spiegelrad 12 hin ab. Das Spiegelrad 12 weist bei dem dargestellten Ausführungsbeispiel einen hexagonalen Grundriß und sechs ebene Spiegelflächen I, 2, 3, 4, 5, 6 am Außenmantel auf. Die Spiegelflächen I, 2, 3, 4, 5, 6 sind unter verschiedenen Winkeln gegen die Drehachse des Spiegelrads 12 geneigt. Je nachdem, welche Spiegelfläche 1, 2, 3, 4, 5, 6 von dem Sendelichstrahl 14 getroffen wird, erfolgt daher eine unterschiedliche Ablenkung, was in der Zeichnung exemplarisch anhand der Lichtstrahlen 1', 3', 6, illustriert ist, die von den Spiegelflächen 1, 3, 6 reflektiert werden. Gezeichnet sind nur die Hauptachsen der Sende- und Empfangsstrahlen von den Polygonflächen, wobei der Strahl 1 unten, der Strahl 3 in der Mitte und Strahl 6 oben gezeichnet ist.

Das vom Spiegelrad 12 reflektierte Licht wird über verschiedene, nicht näher dargestellte optische Elemente auf einen Hohlspiegel 16 geworfen, der es bei Drehung des Spiegelrads 12 mit parallelem Strahlengang zeilenförmig umlenkt. Das von den verschiedenen Spiegelflächen 1, 2, 3, 4, 5, 6 kommende Licht wird dabei in parallelen Abtastzeilen 18 auf einen zu scannenden Gegenstand 20 geworfen, der ein Strichcodefeld 22 mit einer Anzahl verschieden dicker Codestriche 24 trägt. Zum Auslesen des Strichkodes sollten sich die Abtastzeilen 18 im wesentlichen senkrecht zu den Codestrichen 24 erstrecken. Das kann durch feste geometrische Vorgaben erreicht werden.

Es ist aber auch möglich, der zeilenweisen Abtastung eine langsame Drehung der Scanrichtung zu überlagern, aufgrund der die Abtastzeilen während eines Codeauslesevorgangs irgendwann in die gewünschte, im wesentlichen senkrecht zu den Codestrichen 24 orientierte Lage kommen, worauf der Strichcode erkannt und ausgelesen wird. Die parallelen Abtastzeilen 18 liegen unter annähernd gleichem Abstand in einem Band, dessen Breite etwa ein Viertel der Codestrichlänge beträgt.

Der Gegenstand 20 streut das auffallende Licht im wesentlichen in sich selbst zurück. Das Licht gelangt über den Hohlspiegel 16 und das Spiegelrad 12 an einen Strahlteiler 26, wo es ausgekoppelt wird. Der Strahlteiler 26 kann von einem halbdurchlässigen Spiegel gebildet werden, der unter 45° im Sendelichtstrahl 14 liegt. Das vom Gegenstand 20 gestreute reflektierte und vom Strahlenteiler 26 ausgekoppelte Licht wird über eine geeignete Abbildungsoptik 28 auf einen Photodetektor 30 geworfen, wobei nur die Randstrahlen des gestreuten Lichtes aus Gründen der Übersichtlichkeit kurz vor dem Strahlteiler 26 bis zum Photodetektor 30 gezeichnet worden sind. Am Ausgang des Photodetektors 30 steht dann ein der Lichtintensität entsprechendes elektrisches Analogsignal. Dieses Signal wird zur weiteren Verarbeitung einer Analog-Digital-Wandlung unterworfen. In einer ersten Variante verwendet man hierzu einen hell und dunkel diskriminierenden AnalogDigital-Wandler, der ein 1-Bit Signal abgibt. Alternativ kann aber auch ein Analog-Digital-Wandler mit einer Mehrzahl von Schaltschwellen zum Einsatz kommen, die jeweils Helligkeitsstufen entsprechen. Am Ausgang eines solchen AnalogDigital Wandlers steht dann ein Mehr-Bit Signal, insbesondere ein 8-Bit Signal, zur Verfügung, das die jeweils vorliegende Helligkeitsstufe identifiziert.

Im folgenden sei exemplarisch angenommen, daß der Scanner eine Scanbreite von 1000 mm hat. Die Zeit zum Überstreichen dieser Scanbreite mag einige wenige Millisekunden, eventuell aber auch nur Bruchteile einer Millisekunde betragen. Die kleinste zu detektierende Codestrichbreite ist typischerweise 0,5 mm. Um Strichbreiten in dieser Größenordnung sicher zu erkennen, muß mit einer Auflösung von ca. 0,1 mm abgetastet werden. Über die ganze Scanbreite fallen also in der sehr kurzen Abtastzeit ca. 10.000 Signale an, wobei im folgenden zunächst einmal von 1-Bit Signalen ausgegangen wird.

Der dem Fotodetektor 30 nachgeordnete Analog-Digital-Wandler ist mit einem ersten digitalen Speicher verbunden, der bei dem dargestellten Ausführungsbeispiel aus sechs Schieberegistern 1″, 2″, 3″, 4″, 5″, 6″ aufgebaut ist. Bei 1-Bit Signalen hat jedes der Schieberegister eine Kapazität von 10.000 Bit. Es ist also geeignet, die über eine volle Scanbreite anfallenden Signale aufzunehmen. Die Schieberegister 1″, 2″, 3″, 4″, 5″, 6″ sind untereinander verbunden, so daß das vom Analog-Digital-Wandler kommende Eignal durchgeschoben wird. Der erste Speicher ist belegt, wenn der Gegenstand 20 mit allein zur Verfügung stehenden Abtastzeilen 18 überstrichen wurde. Das ist in einer Abtastperiode der Fall, die bei dem dargestellten Ausführungsbeispiel durch eine volle Umdrehung des Spiegelrads 12 gegeben ist. Die Schieberegister 1″, 2″, 3″, 4″, 5″, 6″ enthalten dann Signale, die auf je einer der Abtastzeilen 18, d. h. unter Abbildung über je eine der Spiegelflächen 1, 2, 3, 4, 5, 6, über die volle Scanbreite angefallen sind. Im Fall von Mehr-Bit Signalen wären hierzu anstelle einzelner Schieberegister Sätze mit einer Mehrzahl paralleler Schieberegister vorzusehen, im Fall von 8-Bit Signalen beispielsweise also acht Schieberegister pro Satz (nicht dargestellt).

Strichcodefelder 22 haben eine typische Länge von ca. 50 mm. Die restliche Oberfläche des abgetasteten Gegenstands 20 ist mit einem Streudruck o. ä. versehen, der keine auszulesende Information enthält. Vorausgesetzt, daß überhaupt ein Strichcodefeld 22 im Abtastbereich des Scanners liegt, und die Abtastzeilen 18 die gewünschte Orientierung im wesentlichen quer zu den Codestrichen 24 haben, liegt nach einer Abtastperiode in dem ersten Speicher nur zu einem sehr geringen Teil relevante Information vor.

Erfindungsgemäß findet nun eine schnelle Vorauswertung statt, mit der die von einem Strichcode stammende Information identifiziert, in dem ersten Speicher lokalisiert und für die weitere Signalauswertung herausgegriffen wird. Die Vorauswertung wird mit einem Programmierbaustein 32 durchgeführt, der auf die Schieberegister 1″, 2″, 3″, 4″, 5″, 6″ zugreift. Linien eines Strichcodes können dadurch identifiziert werden, daß sämtliche Schieberegister oder auch nur ein Teil der Schieberegister an der gleichen Abtaststellen zugeordneten Adresse dieselbe Information enthalten. Wenn man Strichcodes auch in Schräglage erfassen will, kann man auch jeweils einen Nachbarschaftsbereich der entsprechenden Adressen in die Vorauswertung einbeziehen, was durch eine geeignete programmierung des Programmierbausteins 32 leicht möglich ist. Von Strichcodes stammende Signale zeichnen sich auch dadurch aus, daß sie einen zusammenhängenden Datenblock in den Schieberegistern bilden. Zufällige Übereinstimmungen der gespeicherten Information an der gleichen Abtaststelle zugeordneten Adressen wird daher bei der Vorauswertung nicht als Eignal eines Strichcodes gewertet, wenn es sich um eine isolierte Stelle in den Schieberegistern handelt. Diese Prüfung wird vorzugsweise mit einem Zähler 34 durchgeführt, der dem Programmierbaustein 32 nachgeordnet ist. Anhand der Speicheradressen der Schieberegister bzw. eines diese Speicheradressen repräsentierenden, die Information durch die Schieberegister durchschiebenden Taktsignals können nicht nur Position und Länge des von einem Strichcode stammenden Signalanteils, sondern auch die Winkellage des Strichcodes bezüglich der Abtastzeilen 18 identifiziert werden, wozu bei dem dargestellten Ausführungsbeispiel eine dem Zähler 34 nachgeordnete weitere Auswerteeinheit 36 vorgesehen iet. Bei Mehr-Bit Signalen besteht die Möglichkeit, eine optimale Schärfenebene zu bestimmen, und die zur Weiterverarbeitung kommenden Signale dementsprechend auszuwählen.

Die von einem Strichcode stammenden, nach den beschriebenen Kriterien herausgegriffenen Signale werden in einen zweiten Speicher 38 übertragen, der eine wesentlich geringere Speicherbreite, aber dafür größere Speichertiefe hat, als der erste Speicher. Der zweite Speicher 38 ist aus miteinander verbundenen Schieberegistern 40 aufgebaut, deren Kapazität jeweils auf die aus einem Strichcode stammende Informationsmenge aus gelegt ist, im Fall von 1-Bit Signalen bei dem dargestellten Ausführungsbeispiel also auf ca. 500 Bit. Das ist nur ein Bruchteil der Kapazität der im ersten Speicher verwendeten Schieberegister $1''$, $2''$, $3''$, $4''$, $5''$, $6''$, die jeweils die von einer ganzen Abtastzeile stammende Information aufnehmen. Im zweiten Speicher 38 sind nun aber 120 bis 600 derartiger Schieberegister 40 vorgesehen, d. h. eine Anzahl, die die der Abtastzeilen 18 um das 20 bis 100fache übersteigt. Es können so die in 20 bis 100 Abtastperioden gewonnenen und von einem Strichcode stammend identifizierten Signale in den zweiten Speicher 38 eingespeichert werden. Der zweite Speicher 38 hat für die kleinste aufzulösende Codestrichbreite dieselbe Anzahl von Speicherplätzen, wie der erste Speicher, so daß die Genauigkeit der Ortsauflösung bei Umspeichern erhalten bleibt. Sollen ausgehend von Mehr Bit Signalen im ersten Speicher auch Mehr-Bit Signale weiterverarbeitet werden, so kann auch der zweite Speicher 38 aus Sätzen paralleler, in der jeweiligen Bit-Zahl vorge sehener Schieberegister bestehen (nicht dargestellt).

Zur inhaltlichen Analyse der Strichcodeinformation greift nun ein Auswerterechner 42 auf den zweiten Speicher 38 zu. Das kann völlig unabhängig von der Abtastfunkion des Scanners mit einer eigenen Taktfrequenz erfolgen. Für die zweite Stufe der Auswertung stehen isoliert die in 20 bis 100 Abtastperioden gewonnenen, von einem Strichcode stammenden Signalanteile zur Verfügung. Die Analyse der Strichcodeinformation kann daher mit einem großen Datensatz und zahlreichen Prüfschritten vorgenommen werden, ohne daß es dazu eines aufwendigen, schnellen Auswerterechners bedürfte. Erforderlichenfalls können auch mehrere Auswerterechner parallel geschaltet werden, die in einem Time-Sharing-Verfahren auf den zweiten Speicher zugreifen.

Die Erfindung ist für Scanner mit verschiedenstem Strahlengang geeignet. Sie kann insbesondere sowohl für Scanner mit telezentrischem Strahlengang als auch für strahlendivergierende V-Scanner angewendet werden.

Liste der Bezugszeichen

1, 2, 3, 4, 5, 6 - Spiegelflächen
10 - Lichtsender
12 - Spiegelrad
14 - Sendelichtstrahl
$1'$, $3'$, $6'$ - Lichtstrahl
16 - Hohlspiegel
18 - Abtastzeile
20 - Gegenstand
22 - Strichcodefeld
24 - Codestrich
26 - Strahlteiler
28 - Abbildungsoptik
30 Fotodetektor
$1''$, $2''$, $3''$, $4''$, $5''$, $6''$ - Schieberegister
32 - Programmierbaustein
34 - Zähler
36 - Auswerteeinheit
38 - zweiter Speicher
40 - Schieberegister
42 - Auswerterechner

**Ansprüche**

1. Scanner zur Erfassung von Strichcodes auf Gegenständen mit einem Lichtsender, der zur zeilenweisen Abtastung des Gegenstands Licht auf ein rotierendes Spiegelrad hin abstrahlt, mit einer Optik die von dem Gegenstand zurückgestreutes Licht aufnimmt und einem Fotodetektor überstellt, umd mit einer das Ausgangssignal des Fotodetektors verarbeitenden Auswerteelektronik,
dadurch **gekennzeichnet,**
daß das Spiegelrad (12) bezüglich seiner Drehachse unterschiedlich geneigte Spiegelflächen (1, 2, 3, 4, 5, 6) hat, die das Licht in parallelen Abtastzeilen (18) auf den Gegenstand (20) werfen.

2. Scanner nach Anspruch 1
dadurch **gekennzeichnet,**
daß ein Speicher vorhanden ist, in den das Ausgangssignal des Fotodetektors (30) eingespeichert wird, und daß zu der Auswerteelektronik eine auf den Speicher zugreifende Vorauswertestufe gehört, die anhand des für mehrere Abtastzeilen (18) eingespeicherten Signals den Signalanteil, der von einem durch die Abtastzeilen (18) erfaßten Strichcode stammt, identifiziert und zur weiteren Signalauswertung herausgreift, und/oder daß das Spiegelrad (12) regelmäßig polygonal ist, und daß die Spiegelflächen (1, 2, 3, 4, 5, 6) unterschiedlich bezüglich der Drehachse geneigt sind, so daß die Zahl der Abtastzeilen (18) der der Polygonspiegel entspricht. Gezeichnet sind nur die Hauptachsen des Sende- und Empfangsstrahlers von den Polygonflächen, wobei der Strahl 1 unten und der Strahl 3 in der Mitte und der Strahl 6 oben gezeichnet wird.

3. Scanner nach Anspruch 1 oder 2,
dadurch **gekennzeichnet,**
daß der Abstand der beiden äußersten Abtastzeilen (18) ca. ein Viertel der Codestrichlänge beträgt und/oder daß der zeilenweisen Abtastung eine langsame Drehung der Scanrichtung überlagert ist.

4. Scanner nach einem der Ansprüche 1 bis 3,
dadurch **gekennzeichnet,**
daß das Ausgangssignal des Fotodetektors (30) ein 1-Bit Hell-Dunkelsignal ist.

5. Scanner nach einem der Ansprüche 1 bis 3,
dadurch **gekennzeichnet,**
daß das Ausgangssignal des Fotodetektors (30) ein Helligkeitsstüfen diskriminierendes Mehr-Bit Signal ist, insbesondere ein 8-Bit Signal.

6. Scanner nach einem der Ansprüche 1 bis 5,
dadurch **gekennzeichnet,**
daß der Speicher für die kleinste aufzulösende Codestrichbreite wenigstens fünf Speicherplätze hat und/oder daß der Speicher aus miteinander verbundenen Schieberegistern (1″, 2″, 3″, 4″, 5″, 6″) aufgebaut ist, wobei für jede Abtastzeile (18) ein Schieberegister (1″, 2″, 3″, 4″, 5″, 6″) bzw. ein Satz Schieberegister vorhanden sein kann.

7. Scanner nach einem der Ansprüche 1 bis 6,
dadurch **gekennzeichnet,**
daß die Vorauswertestufe wenigstens einen Programmierbaustein ( 2) enthält und/oder daß ein zweiter Speicher (38) vornden ist, in den der als von einem Strichcode stammend identifizierte Signalanteil aus dem ersten Speicher übertragbar ist.

8. Scanner nach einem der Ansprüche 1 bis 7,
dadurch **gekennzeichnet,**
daß die Kapazität des ersten Speichers entsprechend der vollenscanbreite und der Anzahl von Abtastzeilen (18) dimensioniert ist, während die Kapazität des zweiten Speichers (38) auf die übliche Länge eines Strichcodefelds, die wesentlich kleiner sein kann als die Scanbreite, und ein Mehrfaches, beispielsweise 20 bis 100faches, der Anzahl von Abtastzeilen (18) ausgelegt ist, so daß in einer entsprechenden Zahl von Abtastperioden gewonnene, als von einem Strichcode stammend identifizierte Signalanteile in den zweiten Speicher (38) übertragbar sind, und/oder daß der zweite Speicher (38) aus miteinander verbundenen Schieberegistern (40) aufgebaut ist, wobei für jeden als von einem Strichcode stammend identifi zierten Signalanteil ein Schieberegister (40) bzw. ein Satz Schieberegister vorhanden sein kann.

9. Scanner nach einem der Ansprüche 1 bis 8,
dadurch **gekennzeichnet,**
daß der zweite Speicher (38) für die kleinste aufzulösende Codestrichbreite dieselbe Anzahl von Speicherplätzen hat, wie der erste Speicher und/oder daß die Auswerteelektronik zur Analyse der Strichcodeinformation auf den zweiten Speicher (38) zugreift.

10. Scanner nach einem der Ansprüche 1 bis 9,
dadurch **gekennzeichnet,**
daß die Auswerteelektronik wenigstens einen Auswerterechner (42) enthält, der nicht notwendigerweise synchron mit der Abtastfrequenz des Scanners Signale aus dem zweiten Speicher (38) ausliest und/oder daß die Auswerteelektronik mehrere parallele Auswerterechner enthält, die in einem Time-Sharing-Verfahren Signale aus dem zweiten Speicher (38) auslesen.